(19) Europäisches Patentamt
European Patent Office
Office européen des brevets

(11) **EP 4 668 349 A1**

(12) **EUROPEAN PATENT APPLICATION**
published in accordance with Art. 153(4) EPC

(43) Date of publication:
**24.12.2025 Bulletin 2025/52**

(21) Application number: **25764536.6**

(22) Date of filing: **27.05.2025**

(51) International Patent Classification (IPC):
**H01M 4/06** (2006.01)     **H01M 4/08** (2006.01)
**H01M 4/04** (2006.01)     **H01M 6/14** (2006.01)

(52) Cooperative Patent Classification (CPC):
**H01M 4/04; H01M 4/06; H01M 4/08; H01M 6/14;**
**Y02E 60/10**

(86) International application number:
**PCT/CN2025/097517**

(87) International publication number:
**WO 2025/214513 (16.10.2025 Gazette 2025/42)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **31.12.2024  CN 202411999766**

(71) Applicant: **Eve Energy Co., Ltd.**
**Huizhou Guangdong 516000 (CN)**

(72) Inventors:
• **QIU, Lida**
**Huizhou Guangdong 516000 (CN)**

• **DENG, Huihui**
**Huizhou Guangdong 516000 (CN)**
• **ZHANG, Bingmiao**
**Huizhou Guangdong 516000 (CN)**
• **FANG, Yinyin**
**Huizhou Guangdong 516000 (CN)**
• **CAO, Lang**
**Huizhou Guangdong 516000 (CN)**
• **ZHU, Yuan**
**Huizhou Guangdong 516000 (CN)**

(74) Representative: **Regimbeau**
**20, rue de Chazelles**
**75847 Paris Cedex 17 (FR)**

(54) **THICK-ELECTRODE POSITIVE ELECTRODE SHEET AND PREPARATION METHOD THEREFOR, AND PRIMARY BATTERY**

(57)     Provides are a thick-electrode cathode sheet, a preparation method therefor and a primary battery. The method includes: first, mixing a cathode active material, a conductive agent, and a binder resin to obtain a mixed material; and subjecting the mixed material to fibrillation treatment to obtain a fibrillized mixed material; then subjecting the fibrillized mixed material and a granulating agent to granulation treatment to obtain a precursor material; and finally, subjecting the precursor material to rolling and film-formation treatment to obtain the thick-electrode cathode sheet.

FIG. 4

## Description

This application claims priority to Chinese Patent Application No. 2024119997665 filed with CNIPA on December 31, 2024, the disclosure of which is incorporated herein by reference in its entirety.

TECHNICAL FIELD

The present application relates to the technical field of batteries, and specifically relates to a thick-electrode cathode sheet, a preparation method therefor and a primary battery.

BACKGROUND

In the battery manufacturing process, cells of cylindrical batteries are usually prepared by the winding method, which specifically involves stacking and winding a cathode, a separator, and an anode in sequence. By using this method, the effective area of the electrode sheet can be increased, and the energy density of the battery can be improved. For rechargeable secondary batteries, both the cathode and the anode are coated with slurry on both sides of the current collector foil (such as aluminum foil or copper foil) to form long strip electrode sheets. However, due to the irreversible chemical reaction, the primary battery mainly uses the method of filling the mesh current collector with as much active material as possible to further improve the capacity of the battery, and in such a structural design, the thickness of the electrode sheet is high under the same high compaction density, that is, the thickness can reach 500 $\mu$m.

For example, the lithium manganese dioxide battery is a battery with electrolytic manganese dioxide as the cathode and lithium metal as the anode, and the specific electrochemical reaction formula is: $MnO_2 + xLi \rightarrow Li_xMnO_2$. The preparation of the cathode sheet of lithium manganese dioxide column-shaped battery usually adopts the slurry method, which includes preparing manganese dioxide, a conductive agent, and a binder into a cathode active material slurry, and subjecting a current collector mesh to slowly pass through a slurry pool of the cathode active material to uniformly stretch the slurry on the mesh, and then dried and precision pressed to finally form the cathode sheet. The above preparation process has defects such as high slurry requirements, high production energy consumption, high powder-loss rate of the prepared cathode sheet, and inability to prepare the cathode sheet with high compaction density.

For another example, the lithium thionyl chloride battery has the advantages of high specific energy (up to 590 Wh/kg), high rated voltage (3.6 V), low self-discharge rate ($\leq$1%) and wide operating temperature range (-55°C to 85°C), which is the battery with the highest specific energy in commercial applications. The working principle of the lithium thionyl chloride battery is based on the chemical reaction of lithium with thionyl chloride ($SOCl_2$). The battery is composed of lithium metal as the anode, carbon as the cathode, $SOCl_2$ solution of anhydrous lithium tetrachloroaluminate as the electrolyte and the cathode active substance, and the reaction formula of the occurring electrochemical reaction is: $4Li + 2SOCl_2 \rightarrow 4LiCl + S\downarrow + SO_2$.

In lithium thionyl chloride column-shaped batteries, power batteries usually adopt a winding structure, specifically involving mixing and preparing acetylene black, polytetrafluoroethylene emulsion, and ethanol or isopropanol into powder, and evenly pasting the powder on a nickel mesh, and then winding the nickel mesh into an integrated structure with the separator and anode in sequence. Alternatively, after mixing and preparing into powder, the powder is subjected to multiple kneading and rolling to prepare a self-supporting film, and finally, the self-supporting film is overlaid on a nickel mesh for compounding.

TECHNICAL PROBLEM

In fact, due to the large thickness of the power battery electrode sheet and the need to use acetylene black as the conductive agent, as well as the usually small density and particle size of acetylene black, it is difficult to prepare a slurry suitable for coating production equipment. In addition, the use of self-supporting acetylene black film overlay screen form cannot realize the automatic and continuous production, while the preparation form of powder press screen will lead to a high powder-loss rate; thus these two production methods both have certain shortcomings.

In recent years, the dry electrode process has received extensive attention in order to further produce thick electrode sheets to improve the energy density of batteries. The core of the dry electrode process is using the fibrillation ability of polytetrafluoroethylene (PTFE) binder, then dispersing PTFE into a fibrous structure and mixing with an active material and a conductive agent to form a self-supporting or non-self-supporting electrode film. In this process, no solvent is need, avoiding the drawbacks of solvent residues in conventional wet processes, while possessing the advantages of environmentally friendly, cost-effective, and productive. However, the dry electrode process has large difficulty in production, high requirements on the fibrillation degree of polytetrafluoroethylene, and because no solvent is added, the formed fibers are extremely prone to breaking during the dispersion process, and at the same time, the active material particles come into stress accumulation during film formation, leading to uneven thickness of the formed electrode film.

Therefore, it is of urgent need to develop a method to optimize the fibrillation process of PTFE to improve its mechanical strength and stability, as well as to solve the adhesion deficiencies between the current collector and the dry electrode film.

SUMMARY

TECHNICAL SOLUTION

The present application provides a thick-electrode cathode sheet, a preparation method therefor and a primary battery. The preparation method provided in the present application can be widely applied to the battery system that needs to use a current collector mesh to make a thick electrode (>500 $\mu$m), and solves the defects of the thick electrode sheet using the current collector mesh, such as difficult to achieve continuous automatic production, the high powder-loss rate, and the uneven thickness.

In a first aspect, the present application provides a preparation method for a thick-electrode cathode sheet, and the preparation method includes the following steps:

S1. mixing a cathode active material, a conductive agent, and a binder resin to obtain a mixed material;

S2. subjecting the mixed material to fibrillation treatment to obtain a fibrillized mixed material;

S3. subjecting the fibrillized mixed material and a granulating agent to granulation treatment to obtain a precursor material; wherein the granulating agent is a liquid with a vapor pressure of more than or equal to 0.2 mmHg; and

S4. subjecting the precursor material to rolling and film-formation treatment to obtain the thick-electrode cathode sheet.

In a second aspect, the present application provides a thick-electrode cathode sheet, and the thick-electrode cathode sheet is prepared by the preparation method for a thick-electrode cathode sheet according to the first aspect.

In a third aspect, the present application provides a primary battery; the primary battery includes a cathode sheet, an anode sheet, an electrolyte, and a separator, and the cathode sheet includes the thick-electrode cathode sheet according to the second aspect.

BENEFICIAL EFFECTS

Compared with the prior art, the present application has the following beneficial effects.

The present application provides a preparation method for a thick-electrode cathode sheet. On the one hand, in the present application, a binder resin is used for dispersion treatment, and the binder is subjected to shearing-fibrillation treatment, forming a three-dimensional fiber network to adhesive to the cathode active material particles. Since the binder resin has a larger molecular mass than that of binder emulsions, allowing more fibers to be produced during fibrillation process. These fibers are able to better adhesive to the cathode active material particles, and ultimately improving the bonding strength and electrochemical properties of the cathode material. On the other hand, in the present application, the fibrillized mixed material and the granulating agent are subjected to granulation treatment, thus a liquid material that can volatilize at room temperature wraps the binder fibers and helps the binder fibers to granulate. In the granulation process, the material particles are further subjected to secondary fibrillation to form rubber-like particles with a certain strength, thereby improving the film-forming strength of the latter section. Simultaneously, a small amount of the granulating agent can make it easier for the cathode active material to move during the rolling process, thereby avoiding the generation of accumulation patterns on the electrode film due to stress, and improving the uniformity of the thickness of the electrode film.

Compared with the wet-coating process in the related technology, the preparation method provided in the present application reduces the usage amount of solvent, and omits the conventional front-end film-forming process, and does not need to additionally coat the surface of the current collector with binder, thereby realizing the continuous winding, which greatly improves the automation level of the production line, and avoids the error caused by manual intervention in the production process. Simultaneously, the preparation method provided in the present application has high adjustability, and can regulate the parameters of the electrode film, such as the compaction density, liquid absorption rate, and conductivity by adjusting the parameters of rolling and film-formation process, the content of the granulating agent, and the content of the binder to adapt to the production of electrode sheets of different types of batteries.

In addition, the thick-electrode cathode sheet prepared in the present application has the advantages of highs strength and low powder-loss rate.

Other aspects will be appreciated upon reading and understanding the drawings and detailed description.

BRIEF DESCRIPTION OF DRAWINGS

FIG. 1 is a structural diagram of four-roller pressing equipment provided by some embodiments of the present application;

FIG. 2 is a structural diagram of eight-roller pressing equipment provided by some embodiments of the present application;

FIG. 3 is a structural diagram of ten-roller pressing equipment provided by some embodiments of the present application;

FIG. 4 is a structural diagram of the thick-electrode cathode sheet provided by some embodiments of the present application; and

in the figures, 1-electrode sheet, 2-current collector mesh, 3-electrode film.

DETAILED DESCRIPTION

In a first aspect, the present application provides a preparation method for a thick-electrode cathode sheet, and the preparation method includes the following steps:

S1. mixing a cathode active material, a conductive agent, and a binder resin to obtain a mixed material;

S2. subjecting the mixed material to fibrillation treatment to obtain a fibrillized mixed material;

S3. subjecting the fibrillized mixed material and a granulating agent to granulation treatment to obtain a precursor material; wherein the granulating agent is a liquid with a vapor pressure of more than or equal to 0.2 mmHg; and

S4. subjecting the precursor material to rolling and film-formation treatment to obtain the thick-electrode cathode sheet.

It should be noted that the granulating agent in the present application is a liquid with a vapor pressure of more than or equal to 0.2 mmHg, specifically referring to at room temperature, the vapor pressure is more than or equal to 0.2 mmHg, which may be, for example, 0.2 mmHg, 0.4 mmHg, 0.6 mmHg, 0.8 mmHg, 1 mmHg, 1.2 mmHg, 1.5 mmHg, 1.8 mmHg, or 2 mmHg.

On the one hand, in the present application, a binder resin is used for dispersion treatment, and the binder is subjected to shearing-fibrillation treatment, forming a three-dimensional fiber network to adhesive the cathode active material particles. Since the binder resin has a larger molecular mass than that of binder emulsions, allowing more fibers to be produced during fibrillation process. These fibers are able to better adhesive the cathode active material particles, and ultimately improving the bonding strength and electrochemical properties of the cathode material. On the other hand, in the present application, the fibrillized mixed material and the granulating agent are subjected to granulation treatment, thus a liquid material that can volatilize at room temperature wraps the binder fibers and helps the binder fibers to granulate. In the granulation process, the material particles are further subjected to secondary fibrillation to form rubber-like particles with a certain strength, thereby improving the film-forming strength of the latter section. Simultaneously, a small amount of the granulating agent can make it easier for the cathode active material to move during the rolling process, thereby avoiding the generation of accumulation patterns on the electrode film due to stress, and improving the uniformity of the thickness of the electrode film.

Optionally, the cathode active material in step S1 includes manganese dioxide and/or acetylene black.

Optionally, the binder resin in step S1 includes polytetrafluoroethylene.

Optionally, in a case where the cathode active material in step S1 is manganese dioxide, based on the total mass of the mixed material as 100%, a mass percentage content of the binder resin in step S1 is 1wt.%-5wt.%, optionally 1.5wt.%-2.5wt.%, and which may be, for example, 1wt.%, 1.2wt.%, 1.5wt.%, 1.8wt.%, 2wt.%, 2.2wt.%, 2.5wt.%, 2.8wt.%, 3wt.%, 3.2wt.%, 3.5wt.%, 3.8wt.%, 4wt.%, 4.2wt.%, 4.5wt.%, 4.8wt.%, or 5wt.%. In the present application, by regulating the mass percentage content of the binder resin, the binder fibers can be fully expanded, forming a three-dimensional network that binds the cathode active material particles, thereby controlling the formation of the electrode sheet. If a lower mass percentage content of the binder resin is used, the cathode active material cannot be fully bonded, resulting in issues of strip breakage or unable transfer of the electrode film during the rolling and film-formation process, furthermore, the prepared cathode sheet has a high powder-loss rate, ultimately affecting the electrical performance of the primary battery; if a higher mass percentage content of the binder resin is used, the film resistance of the cathode sheet increases accordingly, thereby affecting the internal resistance and discharge performance of the assembled primary battery.

Optionally, in a case where the cathode active material in step S1 is acetylene black, based on the total mass of the mixed material as 100%, a mass percentage content of the binder resin in step S1 is 5wt.%-15wt.%, optionally 6wt.%-8wt.%. In the present application, by regulating the mass percentage content of the binder resin, the binder fibers can be fully expanded, forming a three-dimensional network that binds the cathode active material particles, thereby controlling the formation of the electrode sheet. If a lower mass percentage content of the binder resin is used, the cathode active material cannot be fully bonded, resulting in issues of strip breakage or unable transfer of the electrode film during the rolling and film-formation process; furthermore, the prepared cathode sheet has a high powder-loss rate, ultimately affecting the electrical performance of the primary battery; if a higher mass percentage content of the binder resin is used, the film resistance of the cathode sheet increases accordingly, thereby affecting the internal resistance and discharge performance of the assembled primary battery.

Optionally, the mixing in step S1 is performed in a manner of gravity-free mixing.

Optionally, the mixing in step S1 is performed at a temperature of lower than 19°C, which may be, for example, -10°C, -5°C, 0°C, 5°C, 10°C, or 15°C.

In the present application, the manner and the temperature of the material mixing are further adjusted, avoiding the premature fibrillation of binder resin during the mixing process.

Optionally, equipment for the fibrillation treatment in step S2 includes a high-speed mixer and/or a jet mill.

Optionally, a linear velocity of the high-speed mixer is 50-150 m/s, which may be, for example, 50 m/s, 60 m/s, 70 m/s, 80 m/s, 90 m/s, 100 m/s, 110 m/s, 120 m/s, 130 m/s, 140 m/s, or 150 m/s.

Optionally, an air pressure of the jet mill is 0.75-0.85 MPa, which may be, for example, 0.75 MPa, 0.78 MPa, 0.8 MPa, 0.82 MPa, or 0.85 MPa.

Optionally, the granulating agent in step S3 includes any one or a combination of at least two of N-methylpyrrolidone, dimethyl silicone oil, polyethylene glycol, propylene glycol, isoparaffin, mineral oil, or pure water.

Optionally, in a case where the cathode active material is manganese dioxide, based on the total mass of the material for the granulation treatment as 100%, a mass percentage content of the granulating agent in step S3 is 10wt.%-30wt.%, optionally 15wt.%-25wt.%, and which may be, for example, 10wt.%, 12wt.%, 15wt.%, 18wt.%, 20wt.%, 22wt.%, 25wt.%, 28wt.%, or 30wt.%. In the present application, by regulating the mass percentage content of the granulating agent, the fibrillized mixed material can be prepared into precursor material particles with uniform size, good sphericity, and good flowability, which facilitates uniform blanking during the rolling and film-formation process, thereby controlling the thickness uniformity of the film. If a lower mass percentage content of the granulating agent is used, the granulating agent will fail to completely coat the fibrous mixed material, leading to a failure granulation; if a higher mass percentage content of the granulating agent is used, the granulation meshes of precursor material particles will be too large, or the powder material will fail to be granulated (e.g., clumping or forming lumps).

Optionally, in a case where the cathode active material is acetylene black, based on the total mass of the material for the granulation treatment as 100%, a mass percentage content of the granulating agent in step S3 is 30wt.%-70wt.%, optionally, 50wt.%-60wt.%, and which may be, for example, 30wt.%, 40wt.%, 50wt.%, 52wt.%, 55wt.%, 60wt.%, 62wt.%, 65wt.%, 68wt.%, or 70wt.%. Due to the low density of acetylene black material, the added content of the granulating agent is high.

Optionally, the rolling and film-formation in step S4 is performed in a manner including differential-temperature film formation and/or differential-speed film formation, and optionally differential-temperature film formation.

Compared with the manner of differential-speed film formation, the manner of forming films by differential-temperature film formation will not produce stress accumulation between particles during the film formation process, nor will it cause accumulation patterns on the film, thus improving the uniformity and consistency of the thickness and areal density of the film.

Optionally, equipment for differential-temperature film formation includes a differential-temperature film formation roller system.

Optionally, the differential-temperature film formation roller system includes a first pressing roller, a second pressing roller, a third pressing roller, and a fourth pressing roller arranged in sequence; wherein a first feeding inlet is formed above the position between the first pressing roller and the second pressing roller, a second feeding inlet is formed above the position between the third pressing roller and the fourth pressing roller, and the second pressing roller and the third pressing roller can press the powder placed in the first feeding inlet and the second feeding inlet into a continuous film.

Optionally, the rolling direction of the first pressing roller and the third pressing roller is opposite to the rolling direction of the second pressing roller and the fourth pressing roller.

Optionally, the temperature of the first pressing roller and the fourth pressing roller is higher than the temperature of the second pressing roller and the third pressing roller. In the present application, the temperature of the first pressing roller and the fourth pressing roller is adjusted higher than the temperature of the second pressing roller and the third pressing roller, and the reason is that temperature affects the molecular motion and adhesion, specifically manifested as follows: at low temperatures, the molecular motion on the surface of objects slows down, leading to an increased contact area between molecules, which enhances adhesion; in contrast, at high temperatures, the molecular motion on the surface of objects speeds up, leading to a decreased contact area between molecules, which reduces adhesion. Therefore, low-temperature rollers can better maintain the adhesion of objects, making the films easier to adhere to low-temperature rollers.

Optionally, a temperature of both the first pressing roller and the fourth pressing roller is both 50°C-105°C, which may be, for example, 50°C, 60°C, 70°C, 80°C, 90°C, 100°C, or 105°C.

Optionally, a temperature of both the second pressing roller and the third pressing roller is both 20°C-60°C, which may be, for example, 20°C, 30°C, 40°C, 50°C, or 60°C.

Optionally, a temperature difference between the first pressing roller and the second pressing roller is 10°C-90°C, optionally 30°C-50°C, and which may be, for example, 10°C, 20°C, 30°C, 40°C, 50°C, 60°C, 70°C, 80°C, or 90°C. In the present application, by controlling the temperature difference between the first pressing roller and the second pressing roller, the precursor material particles adhere to one side of the second pressing roller after being rolled, and are then transferred to the gap between the second pressing roller and the third pressing roller for the preparation of the cathode sheet.

Optionally, a temperature difference between the fourth pressing roller and the third pressing roller is 10°C-90°C, optionally 30°C-50°C, and which may be, for example, 10°C, 20°C, 30°C, 40°C, 50°C, 60°C, 70°C, 80°C, or 90°C. In the present application, by controlling the temperature difference between the fourth pressing roller and the third pressing roller, the precursor material particles adhere to one side of the third pressing roller after being rolled, and are then transferred to the gap between the second pressing roller and the third pressing roller for the preparation of the cathode sheet.

In the present application, a diameter of the first pressing roller, the second pressing roller, the third pressing roller, and the fourth pressing roller are the same.

In the present application, the centers of the first pressing roller, the second pressing roller, the third pressing roller, and the fourth pressing roller are all located on the same horizontal line.

In the present application, a linear velocity of the first pressing roller, the second pressing roller, the third pressing roller, and the fourth pressing roller is the same.

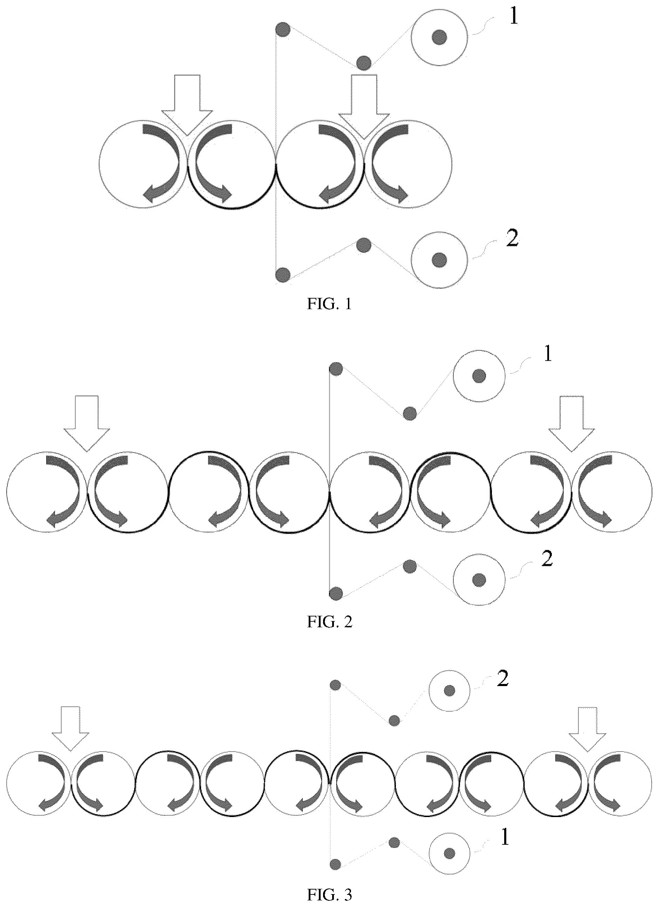

As an optional technical solution of the present application, the precursor materials obtained from the above granulation process in the present application are fed into the gap between the first pressing roller and the second pressing roller of the four-roller pressing equipment, as well as into the gap between the third pressing roller and the fourth pressing roller. A structural diagram of the four-roller pressing equipment is shown in FIG. 1 (in the figure, 1 refers to the electrode sheet, 2 refers to the current collector mesh, and the arrows indicate the blanking positions). The far left is the first pressing roller, followed from left to right by the second pressing roller, the third pressing roller, and the fourth pressing roller. The first pressing roller and the third pressing roller rotate clockwise, while the second pressing roller and the fourth pressing roller rotate counterclockwise.

In the present application, through the technique of differential-temperature roller pressing, the precursor material particles are independently formed into films during the rolling process and adhere to the low-temperature rollers. The thickness of the film is controlled by the size of the gap between the first pressing roller and the second pressing roller, as well as by the gap between the third pressing roller and the fourth pressing roller; while the thickness of the electrode sheet is controlled by the size of the gap between the second pressing roller and the third pressing roller. During the covering of the current collector mesh, the film needs to adhere evenly to the rollers, thereby the film is non-self-supporting during this process. Additionally, the thickness uniformity of the film can be influenced by factors such as the particle size, specific surface area, or microscopic morphology of the active material. To improve the thickness uniformity of the film, equipment with more rollers can be used, such as an eight-roller pressing equipment or a ten-roller pressing equipment (as shown in FIG. 2 and FIG. 3, 1 refers to the electrode sheet and 2 refers to the current collector mesh, and the arrows indicate the blanking positions). These devices can control the thickness distribution of the film more effectively by increasing the number of rollers, thereby improving thickness consistency.

In the present application, the surface of the electrode sheet prepared using the differential-temperature film formation technology is smoother and has a higher areal density.

Optionally, the differential-speed film formation is performed at a rolling temperature of 40°C-110°C, which me be, for example, 40°C, 50°C, 60°C, 70°C, 80°C, 90°C, 100°C, or 110°C.

Optionally, equipment for the differential-speed film formation includes a differential-speed film formation roller system.

Optionally, the differential-speed film formation roller system includes a I-pressing roller, a II-pressing roller, a III-pressing roller, and a IV-pressing roller arranged in sequence; a first feeding inlet is formed above the position between the I-pressing roller and the II-pressing roller, a second feeding inlet is formed above the position between the III-pressing roller and the IV-pressing roller, and the II-pressing roller and the III-pressing roller can press the powder placed in the first feeding inlet and the second feeding inlet into a continuous film.

Optionally, a gap between adjacent rollers in the differential-speed film formation roller system is 0.10-0.60 mm, which may be, for example, 0.10 mm, 0.12 mm, 0.15 mm, 0.18 mm, 0.20 mm, 0.22 mm, 0.25 mm, 0.28 mm, 0.30 mm, 0.32 mm, 0.35 mm, 0.38 mm, 0.40 mm, 0.42 mm, 0.45 mm, 0.48 mm, 0.50 mm, 0.52 mm, 0.55 mm, 0.58 mm, or 0.60 mm.

Specifically, in a case where the cathode active material is manganese dioxide, the gap between adjacent rollers in the differential-speed film formation roller system is 0.20-0.50 mm; in a case where the cathode active material is acetylene black, the gap between adjacent rollers in the differential-speed film formation roller system is 0.10-0.60 mm.

Optionally, the rolling direction of the I-pressing roller and the III-pressing roller is opposite to the rolling direction of the II-pressing roller and the IV-pressing roller.

Optionally, a linear velocity of both the I-pressing roller and the IV-pressing roller is smaller than a linear velocity of both the II-pressing roller and the III-pressing roller.

Optionally, a linear velocity of the I-pressing roller is the same as a linear velocity of the IV-pressing roller.

Optionally, a linear velocity of the II-pressing roller is the same as a linear velocity of the III-pressing roller.

Optionally, a ratio of the linear velocity of the I-pressing roller and/or the IV-pressing roller to the linear velocity of the II-pressing roller and/or the III-pressing roller is 1:(1.1-2), which may be, for example, 1:1.1, 1:1.2, 1:1.3, 1:1.4, 1:1.5, 1:1.6, 1:1.7, 1:1.8, 1:1.9, or 1:2. In the present application, by regulating the ratio of the linear velocity of the I-pressing roller and/or the IV-pressing roller to the linear velocity of the II-pressing roller and/or the III-pressing roller, the precursor material particles can be subjected to greater shearing forces during the rolling process, thereby further enhancing the film formation strength and reducing the powder-loss rate of the cathode sheet. If the linear velocity of the I-pressing roller and/or the IV-pressing roller is overly high, the strip breakage may occur to the film during the rolling process.

Specifically, in a case where a temperature of rolling in the differential-speed film formation is 40°C-80°C, a ratio of the linear velocity of the I-pressing roller and/or the IV-pressing roller to the linear velocity of the II-pressing roller and/or the III-pressing roller is 1:(1.2-1.3); in a case where a temperature of rolling in the differential-speed film formation is 90°C-100°C, a ratio of the linear velocity of the I-pressing roller and/or the IV-pressing roller to the linear velocity of the II-pressing roller and/or the III-pressing roller is 1:(1.1-1.3); in a case where a temperature of rolling in the differential-speed film formation is 110°C, a ratio of the linear velocity of the I-pressing roller and/or the IV-pressing roller to the linear velocity of the II-pressing roller and/or the III-pressing roller is 1:(1.1-2).

In the present application, a diameter of the I-pressing roller, the II-pressing roller, the III-pressing roller, and the IV-pressing roller are the same.

In the present application, the centers of the I-pressing roller, the II-pressing roller, the III-pressing roller, and the IV-pressing roller are all located on the same horizontal line.

As an optional technical solution of the present application, the precursor materials obtained from the above granulation process in the present application are fed into the gap between the I-pressing roller and the II-pressing roller of the four-roller pressing equipment, as well as into the gap between the III-pressing roller and the IV-pressing roller. A structural diagram of the four-roller pressing equipment is shown in FIG. 1 (in the figure, 1 refers to the electrode sheet, 2 refers to the current collector mesh, and the arrows indicate the blanking positions). The far left is the I-pressing roller, followed from left to right by the II-pressing roller, the III-pressing roller, and the IV-pressing roller. The I-pressing roller and the III-pressing roller rotate clockwise, while the II-pressing roller and the IV-pressing roller rotate counterclockwise.

In the present application, through the technique of differential-speed roller pressing, the precursor material particles are independently formed into films during the rolling process and adhere to the high-speed rollers. Specifically, the linear velocity of the II-pressing roller and the III-pressing roller is higher than the linear velocity of the I-pressing roller and the IV-pressing roller, and the linear velocity of the II-pressing roller equals the linear velocity of the III-pressing roller; by regulating the size of the gap between the I-pressing roller and the II-pressing roller and the gap between the III-pressing roller and the IV-pressing roller, the thickness of the film can be controlled.

In the present application, the electrode sheet prepared by differential-speed roller pressing technology has higher strength and better peeling force.

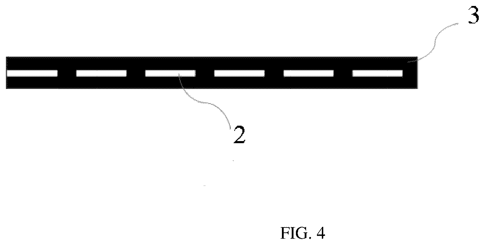

In the present application, the rolling and film-formation process in step S4 includes: placing the precursor material prepared in the granulation step into the feed inlet of the four-roller pressing equipment, subjecting the precursor material to differential-temperature film formation or differential-speed film formation, and converging into a film in opposite directions at the gap between the second pressing roller or the II-pressing roller and the third pressing roller or the III-pressing roller, respectively, during which inserting a current collector mesh from the gap between the second pressing roller or the II-pressing roller and the third pressing roller or the III-pressing roller, and finally forming a sandwich structure (as shown in FIG. 4) with positive active material film on both sides (electrode film 3 in FIG. 4), and the current collector in the middle (current collector mesh 2 in FIG. 4); subjecting the electrode to drying, precision pressing, winding, and collecting to obtain the thick-electrode cathode sheet.

In a second aspect, the present application provides a thick-electrode cathode sheet, and the thick-electrode cathode sheet is prepared by the preparation method according to the first aspect.

In a third aspect, the present application provides a primary battery, which includes a cathode sheet, an anode sheet, an electrolyte, and a separator, and the cathode sheet includes the thick-electrode cathode sheet according to the second aspect.

The numerical range in the present application includes the listed point values, as well as any point values within the above numerical range not listed, which are not recited here for brevity.

The technical solutions of the present application are further illustrated below in conjunction with the attached drawings and specific embodiments. It should be clear to those skilled in the art that the embodiments are merely used for a better understanding of the present application and should not be regarded as a specific limitation to the present application.

First, the effect of the types and contents of polytetrafluoroethylene bonding resin and granulating agent on the performance of the prepared thick-electrode cathode sheet is discussed in the present application, which is specifically illustrated through the following embodiments:

**Example 1**

This example provides a thick-electrode cathode sheet and a preparation method therefor, and the preparation method includes the following steps:

S1: Manganese dioxide powder, conductive agent Super P powder, and polytetrafluoroethylene resin were mixed in a gravity-free mixer at a temperature lower than 19°C to obtain a mixed material, wherein based on the total mass of the mixed material as 100%, the mass percentage content of polytetrafluoroethylene resin was 3wt.%.

S2: The mixed material was subjected to fibrillation treatment in a high-speed mixer at a linear velocity of 100 m/s to obtain a fibrillized mixed material.

S3: The fibrillized mixed material was subjected to jet milling treatment to obtain a ground material; then the ground material and dimethyl silicone oil granulating agent were subjected to stirring-granulation treatment in a high-speed stirring granulator to obtain a precursor material; wherein based on the total mass of the material for granulation treatment as 100%, the mass percentage content of the dimethyl silicone oil granulating agent was 20wt.%.

S4: The precursor material was fed into the feed inlet of the four-roller pressing equipment.

After processing through the differential-temperature film forming roller system, the precursor material converged oppositely at the gap between the second pressing roller and the third pressing roller to form films. Simultaneously, a current collector mesh was inserted through the same gap between the second and third pressing rollers. This process ultimately formed a sandwich-structured cathode sheet with cathode active material films on both sides and the current collector in the middle. After drying and precision pressing, the cathode sheet was wound and collected, producing the thick-electrode cathode sheet. differential-temperature The differential-temperature film formation specifically involved: the precursor material prepared by the above granulation step was put into the gap between the first pressing roller and the second pressing roller, as well as into the gap between the third pressing roller and the fourth pressing roller of the four-roller pressing equipment, and the second pressing roller and the third pressing roller could press the fed powder into a continuous film.

A structural diagram of the four-roller pressing equipment is shown in FIG. 1 (in the figure, 1 refers to the electrode sheet, 2 refers to the current collector mesh, and the arrows indicate the blanking positions). The far left was the first pressing roller, followed from left to right by the second pressing roller, the third pressing roller, and the fourth pressing roller. Diameters of the first pressing roller, the second pressing roller, the third pressing roller, and the fourth pressing roller were the same; the centers of the first pressing roller, the second pressing roller, the third pressing roller, and the fourth pressing roller were all located on the same horizontal line; and the first pressing roller and the third pressing roller rotated clockwise, while the second pressing roller and the fourth pressing roller rotated counterclockwise. Moreover, the temperature of the first pressing roller was 110°C, the temperature of the second pressing roller was 60°C, the temperature of the third pressing roller was 60°C, and the temperature of the fourth pressing roller was 110°C. The linear velocities of the first pressing roller, the second pressing roller, the third pressing roller, and the fourth pressing roller were the same.

**Example 2**

This example differs from Example 1 in that step S3 was adjusted to: the ground material and N-methylpyrrolidone granulating agent were subjected to stirring-granulation treatment in a high-speed stirring granulator to obtain a precursor material, wherein based on the total mass of the material for granulation treatment as 100%, the mass percentage content of N-methylpyrrolidone was 15wt.%. Others were the same as those in Example 1.

**Example 3**

This example differs from Example 1 in that step S3 was adjusted to: the ground material and polyethylene glycol granulating agent were subjected to stirring-granulation treatment in a high-speed stirring granulator to obtain a precursor material, wherein based on the total mass of the material for granulation treatment as 100%, the mass percentage content of polyethylene glycol was 25wt.%. Others were the same as those in Example 1.

**Example 4**

This example provides a thick-electrode cathode sheet and a preparation method therefor, and the preparation method includes the following steps.

S1: Acetylene black, conductive agent Super P powder, and polytetrafluoroethylene resin were mixed in a gravity-free mixer at a temperature lower than 19°C to obtain a mixed material, wherein based on the total mass of the mixed material as 100%, the mass percentage content of polytetrafluoroethylene resin was 10wt.%;

S2: The mixed material was subjected to fibrillation treatment in a jet mill at an air pressure of 0.8 MPa to obtain a fibrillized mixed material;

S3: The fibrillized mixed material and dimethyl silicone oil granulating agent were subjected to stirring-granulation treatment in a high-speed stirring granulator to obtain a precursor material, wherein based on the total mass of the material for granulation treatment as 100%, the mass percentage content of the dimethyl silicone oil granulating agent was 50wt.%.

S4: The precursor material was fed into the feed inlet of the four-roller pressing equipment.

After processing through the differential-temperature film forming roller system, the precursor material converged oppositely at the gap between the second pressing roller and the third pressing roller to form films. Simultaneously, a current collector mesh was inserted through the same gap between the second and third pressing rollers. This process ultimately formed a sandwich-structured cathode sheet with cathode active material films on both sides and the current collector in the middle. After drying and precision pressing, the cathode sheet was wound and collected, producing the thick-electrode cathode sheet. differential-temperature The differential-temperature film formation specifically involved: the precursor material prepared by the above granulation step was put into the gap between the first pressing roller and the second pressing roller, as well as into the gap between the third pressing roller and the fourth pressing roller of the four-roller pressing equipment, and the second pressing roller and the third pressing roller could press the fed powder into a continuous film.

A structural diagram of the four-roller pressing equipment is shown in FIG. 1 (in the figure, 1 refers to the electrode sheet, 2 refers to the current collector mesh, and the arrows indicate the blanking positions). The far left was the first pressing roller, followed from left to right by the second pressing roller, the third pressing roller, and the fourth pressing roller. Diameters of the first pressing roller, the second pressing roller, the third pressing roller, and the fourth pressing roller were the same; the centers of the first pressing roller, the second pressing roller, the third pressing roller, and the fourth pressing roller were all located on the same horizontal line; and the first pressing roller and the third pressing roller rotated clockwise, while the second pressing roller and the fourth pressing roller rotated counterclockwise. Moreover, the temperature of the first pressing roller was 110°C, the temperature of the second pressing roller was 60°C, the temperature of the third pressing roller was 60°C, and the temperature of the fourth pressing roller was 110°C. The linear velocities of the first pressing roller, the second pressing roller, the third pressing roller, and the fourth pressing roller were the same.

**Example 5**

This example differs from Example 1 in that the dimethyl silicone oil granulating agent in step S3 was replaced with an equal content of isopropanol. Others were the same as those in Example 1.

### Example 6

This example differs from Example 1 in that, based on the total mass of the material for granulation treatment as 100%, the mass percentage content of the dimethyl silicone oil granulating agent in step S3 was 5wt.%. Others were the same as those in Example 1.

### Example 7

This example differs from Example 1 in that, based on the total mass of the material for granulation treatment as 100%, the mass percentage content of the dimethyl silicone oil granulating agent in step S3 was 35wt.%. Others were the same as those in Example 1.

### Comparative Example 1

This example differs from Example 1 in that step S3 was adjusted to: the dimethyl silicone oil granulating agent was not added, only the steps of subjecting the fibrillized mixed material to jet milling treatment to obtain a ground material were retained. Others were the same as those in Example 1.

### Comparative Example 2

This example differs from Example 1 in that step S1 was adjusted to: polytetrafluoroethylene resin was replaced with an equal content of polytetrafluoroethylene emulsion; and step S3 was adjusted to: the dimethyl silicone oil granulating agent was not added, only the steps of subjecting the fibrillized mixed material to jet milling treatment to obtain a ground material were retained. Others were the same as those in Example 1.

The thick-electrode cathode sheets prepared by Examples 1-7 and Comparative Examples 1-2 were subjected to performance tests, and the test methods were as follows.

(1) Thickness consistency: An electrode sheet with a diameter of 5 cm was cut from a prepared cathode rolling material every 20 cm by an electrode sheet sampler, and total 20 samples were taken. Each sample was measured with a micrometer (accurate to 0.001 mm), and the relative standard deviation for the thickness of the collected 20 samples was calculated. The relative standard deviation calculation formula is:

$$RSD = \frac{\sqrt{\frac{\sum_{i=1}^{n}(x_i - \bar{x})^2}{n-1}}}{\bar{x}} \times 100\%$$

,

wherein x refers to the thickness of the sample.
(2) Initial peeling force of cathode sheet: 20 electrode sheets of 400 mm × 20 mm were cut from a prepared cathode rolling material, and subjected to test by a universal tensile testing machine, and an average was taken.
(3) Areal density of cathode sheet: The samples that measured the thickness consistency of the electrode sheet were weighed, calculated the areal density of the electrode sheets, and an average was taken. The calculation formula of areal density is: $\rho = \frac{m}{s}$ , wherein m refers to the weight of the sample, and s refers to the sample area.

The test results are shown in Table 1.

Table 1

| | Initial thickness of electrode sheet /$\mu$m | Thickness consistenc y RSD/% | Initial peeling force of electrode sheet /N | Areal density of electrode sheet (g/m$^2$) | Note |
|---|---|---|---|---|---|
| Example 1 | 650 | 0.95 | 0.94 | 1723 | Able to film formation and transfer |
| Example 2 | 642 | 1.07 | 0.85 | 1686 | Able to film formation and transfer |
| Example 3 | 658 | 1.03 | 0.79 | 1850 | Able to film formation and transfer |
| Example 4 | 661 | 0.99 | 0.64 | 286 | Able to film formation and transfer |
| Example 5 | / | / | / | / | Unable to film formation and transfer |
| Example 6 | / | / | / | / | Unable to film formation and transfer |
| Example 7 | / | / | / | / | Unable to film formation and transfer |
| Comparative Example 1 | / | / | / | / | Unable to film formation and transfer |
| Comparative Example 2 | 646 | 1.16 | 0.62 | 1704 | Able to film formation and transfer |

As can be seen from Table 1 and the comparison of Examples 1-4 and Comparative Examples 1-2, in the present application, the granulation treatment step of the fibrillized mixed material and the granulating agent is crucial for improving the thickness consistency, peeling force, and areal density of the thick-electrode cathode sheet.

From the comparison of Example 1 and Example 5, it can be seen that, in the present application, the liquid material that can volatilize at room temperature is preferred to wrap the binder fiber and help the fiber to granulate, thereby improving the film-forming strength at the later stage, avoiding the accumulation pattern on the film caused by stress, and improving the thickness uniformity of the film; however, the isopropyl alcohol disclosed by the related technology cannot achieve the above technical effect.

From the comparison of Example 1 and Examples 6-7, it can be seen that if the content of the granulating agent is not within the optimal content range of the present application, the final granulation effect will be affected, and the precursor material particles cannot complete the film formation and transfer step during the rolling process. At the same time, under the premise of ensuring a certain granulation effect, if the additive content of the granulating agent is higher, the areal density of the prepared cathode sheet will decrease, which is due to the fact that the granulating agent leaves pores inside the cathode sheet after drying, causing a decreased overall density of the cathode sheet.

From the comparison of Example 1 and Comparative Example 2, it can be seen that the polytetrafluoroethylene emulsion disclosed by the relevant technology can also play a fibrillation effect to a certain extent, but it is obvious that the thickness consistency, peeling force and areal density of the cathode sheet prepared by polytetrafluoroethylene emulsion are not as good as the cathode sheet provided in Example 1.

Second, the effect of the method of differential-temperature film formation and the specific parameters thereof on the performance of the prepared thick-electrode cathode sheet is discussed in the present application, which is specifically illustrated in conjunction with Examples 8-18 shown in Table 2 below. Examples 8-18 were the same as Example 1 except that the conditions in Table 2.

Table 2

| | Temperature of the second pressing roller and the third pressing roller /°C | Temperature of the first pressing roller and the fourth pressing roller /°C | Initial thickness of electrode sheet /$\mu$m | Thickness consistency RSD/ % | Initial peeling force of electrode sheet /N | Areal density of electrode sheet (g/m$^2$) | Note |
|---|---|---|---|---|---|---|---|
| Example 8 | 20 | 50 | 649 | 0.27 | 0.47 | 1674 | Able to film formation and transfer |
| Example 9 | 20 | 60 | 653 | 0.58 | 0.62 | 1709 | Able to film formation and transfer |
| Example 10 | 20 | 70 | 655 | 0.62 | 0.77 | 1746 | Able to film formation and transfer |
| Example 11 | 40 | 70 | 650 | 0.35 | 0.56 | 1684 | Able to film formation and transfer |
| Example 12 | 40 | 80 | 648 | 0.72 | 0.69 | 1720 | Able to film formation and transfer |
| Example 13 | 40 | 90 | 645 | 0.88 | 0.85 | 1755 | Able to film formation and transfer |
| Example 14 | 60 | 90 | 651 | 0.56 | 0.70 | 1741 | Able to film formation and transfer |
| Example 15 | 60 | 100 | 644 | 0.79 | 0.89 | 1762 | Able to film formation and transfer |
| Example 16 | 60 | 110 | / | / | / | / | Unable to film formation and transfer |

(continued)

| | Temperature of the second pressing roller and the third pressing roller /°C | Temperature of the first pressing roller and the fourth pressing roller /°C | Initial thickness of electrode sheet /μm | Thickness consistency RSD/ % | Initial peeling force of electrode sheet /N | Areal density of electrode sheet (g/m$^2$) | Note |
|---|---|---|---|---|---|---|---|
| Example 17 | 80 | 120 | / | / | / | / | Unable to film formation and transfer |
| Example 18 | 80 | 130 | / | / | / | / | Unable to film formation and transfer |

As can be seen from Table 2, in the present application, the quality of the prepared cathode sheet can be improved by regulating the minimum temperature of the low-temperature roller and the temperature difference between the high-temperature roller and the low-temperature roller during the differential-temperature film formation.

From the comparison of Example 1 and Examples 16-18, it can be seen that, in a case where the temperature of the low-temperature roller is high (e.g., higher than 60°C), the temperature difference between the low-temperature roller and the high-temperature roller is not obvious, and the granulating agent is prone to evaporate during the rolling process, thus the film is difficult to perform film formation and transfer. On the contrary, with the increasing temperature difference between the low-temperature roller and the high-temperature roller, the film formation process of the film is easier to carry out, thereby increasing the areal density of the cathode sheet. However, the thickness consistency of the cathode sheet will gradually deteriorate due to the evaporation of the granulating agent. It is necessary to consider all aspects in the production process of the cathode sheet to further improve the comprehensive performance of the cathode sheet.

Finally, the effect of the method of differential-speed film formation and the specific parameters thereof on the performance of the prepared thick-electrode cathode sheet is discussed in the present application, which is specifically illustrated in conjunction with Examples 19-33 shown in Table 3 below. Examples 19-33 were the same as Example 1 except that the conditions in Table 3.

Table 3

| | Linear velocity ratio of the low-speed roller to the high-speed roller | Temperature of film formation /°C | Initial thickness of electrode sheet /μm | Thickness consistency RSD/ % | Initial peeling force of electrode sheet /N | Areal density of electrode sheet (g/m$^2$) | Note |
|---|---|---|---|---|---|---|---|
| Example 19 | 1:1.1 | 70 | 650 | / | / | / | Unable to film formation and transfer |
| Example 20 | 1:1.2 | 70 | 650 | 0.74 | 0.64 | 1680 | Able to film formation and transfer |
| Example 21 | 1:1.3 | 70 | 650 | 0.85 | 0.68 | 1662 | Able to film formation and transfer |

(continued)

| | Linear velocity ratio of the low-speed roller to the high-speed roller | Temperature of film formation /°C | **Initial** thickness of electrode sheet /μm | Thickness consistency RSD/ % | Initial peeling force of electrode sheet /N | Areal density of electrode sheet (g/m²) | Note |
|---|---|---|---|---|---|---|---|
| Example 22 | 1:1.5 | 70 | 650 | / | / | / | Unable to film formation and transfer |
| Example 23 | 1:2 | 70 | 650 | / | / | / | Unable to film formation and transfer |
| Example 24 | 1:1.1 | 90 | 650 | 0.78 | 0.79 | 1655 | Able to film formation and transfer |
| Example 25 | 1:1.2 | 90 | 650 | 0.92 | 0.87 | 1638 | Able to film formation and transfer |
| Example 26 | 1:1.3 | 90 | 650 | 0.97 | 1.34 | 1609 | Able to film formation and transfer |
| Example 27 | 1:1.5 | 90 | 650 | / | / | / | Unable to film formation and transfer |
| Example 28 | 1:2 | 90 | 650 | / | / | / | Unable to film formation and transfer |
| Example 29 | 1:1.1 | 110 | 650 | 0.68 | 0.97 | 1684 | Able to film formation and transfer |
| Example 30 | 1:1.2 | 110 | 650 | 0.72 | 1.23 | 1659 | Able to film formation and transfer |
| Example 31 | 1:1.3 | 110 | 650 | 0.91 | 1.40 | 1640 | Able to film formation and transfer |
| Example 32 | 1:1.5 | 110 | 650 | 1.03 | 1.73 | 1603 | Able to film formation and transfer |

(continued)

|  | | Linear velocity ratio of the low-speed roller to the high-speed roller | Temperature of film formation /°C | **Initial** thickness of electrode sheet /$\mu$m | Thickness consistency RSD/ % | Initial peeling force of electrode sheet /N | Areal density of electrode sheet (g/m$^2$) | Note |
|---|---|---|---|---|---|---|---|---|
| Example 33 | | 1:2 | 110 | 650 | 1.14 | 2.71 | 1588 | Able to film formation and transfer |

As can be seen from Table 3, in the present application, by regulating the synergistic effect between the film formation temperature and the linear velocity ratio between the low-speed roller and the high-speed roller during the differential-speed film formation process, the film formation strength is further improved, and the powder loss rate of the cathode sheet is reduced. Examples 19-23 show that, in a case where the rolling temperature is low (e.g., 70°C), a relatively low linear velocity ratio between the low-speed roller and the high-speed roller (e.g., 1:1.1) will lead to insufficient shearing force, and the film is unable to transfer to the side of the high-speed roller; and a relatively high linear velocity ratio between the low-speed roller and the high-speed roller (e.g., 1:1.5) will lead to strip breakage of the film during the transfer process. At the same time, under the same rolling temperature condition, the larger the linear velocity ratio between the low-speed roller and the high-speed roller, the greater the shearing force during the rolling process, thereby, the peeling force of the prepared cathode sheet is greater, but the areal density of the film decreases accordingly.

## Claims

1.   A preparation method for a thick-electrode cathode sheet, comprises the following steps:

S1: mixing a cathode active material, a conductive agent, and a binder resin to obtain a mixed material;
S2: subjecting the mixed material to fibrillation treatment to obtain a fibrillized mixed material;
S3: subjecting the fibrillized mixed material and a granulating agent to granulation treatment to obtain a precursor material; wherein the granulating agent is a liquid with a vapor pressure of more than or equal to 0.2 mmHg; and
S4: subjecting the precursor material to rolling and film-formation treatment to obtain the thick-electrode cathode sheet.

2.   The method according to claim 1, wherein the cathode active material in step S1 comprises manganese dioxide and/or acetylene black.

3.   The method according to claim 1 or 2, wherein the binder resin in step S1 comprises polytetrafluoroethylene.

4.   The method according to any one of claims 1-3, wherein, in a case where the cathode active material in step S1 is manganese dioxide, based on a total mass of the mixed material as 100%, a mass percentage content of the binder resin in step S1 is 1wt.%-5wt.%, and optionally 1.5wt.%-2.5wt.%.

5.   The method according to any one of claims 1-3, wherein, in a case where the cathode active material in step S1 is acetylene black, based on the total mass of the mixed material as 100%, a mass percentage content of the binder resin in step S1 is 5wt.%-15wt.%, and optionally 6wt.%-8wt.%.

6.   The method according to any one of claims 1-5, wherein the mixing in step S1 is performed in a manner of gravity-free mixing;
optionally, the mixing in step S1 is performed at a temperature of lower than 19°C.

7.   The method according to any one of claims 1-6, wherein equipment for the fibrillation treatment in step S2 comprises a high-speed mixer and/or a jet mill;

optionally, a linear velocity of the high-speed mixer is 50-150 m/s;
optionally, an air pressure of the jet mill is 0.75-0.85 MPa.

8. The method according to any one of claims 1-7, wherein the granulating agent in step S3 comprises any one or a combination of at least two of N-methylpyrrolidone, dimethyl silicone oil, polyethylene glycol, propylene glycol, isoparaffin, mineral oil, or pure water;

   optionally, in a case where the cathode active material is manganese dioxide, based on a total mass of the material for the granulation treatment as 100%, a mass percentage content of the granulating agent in step S3 is 10wt.%-30wt.%, and optionally 15wt.%-25wt.%;
   optionally, in a case where the cathode active material is acetylene black, based on the total mass of the material for the granulation treatment as 100%, a mass percentage content of the granulating agent in step S3 is 30wt.%-70wt.%, and optionally 50wt.%-60wt.%.

9. The method according to any one of claims 1-8, wherein the rolling and film-formation in step S4 is performed in a manner comprising differential-temperature film formation and/or differential-speed film formation, and optionally differential-temperature film formation.

10. The method according to claim 9, wherein equipment for differential-temperature film formation comprises a differential-temperature film formation roller system.

11. The method according to claim 10, wherein the differential-temperature film formation roller system comprises a first pressing roller, a second pressing roller, a third pressing roller, and a fourth pressing roller arranged in sequence; wherein a first feeding inlet is formed above the position between the first pressing roller and the second pressing roller, a second feeding inlet is formed above the position between the third pressing roller and the fourth pressing roller, and the second pressing roller and the third pressing roller can press the powder placed in the first feeding inlet and the second feeding inlet into a continuous film;

    optionally, a rolling direction of the first pressing roller and the third pressing roller is opposite to a rolling direction of the second pressing roller and the fourth pressing roller;
    optionally, a temperature of the first pressing roller and the fourth pressing roller is higher than a temperature of the second pressing roller and the third pressing roller;
    optionally, a temperature of both the first pressing roller and the fourth pressing roller is 50°C-105°C;
    optionally, a temperature of both the second pressing roller and the third pressing roller is 20°C-60°C;
    optionally, a temperature difference between the first pressing roller and the second pressing roller is 10°C-90°C, and optionally 30°C-50°C;
    optionally, a temperature difference between the fourth pressing roller and the third pressing roller is 10°C-90°C, and optionally 30°C-50°C.

12. The method according to claim 9, wherein the differential-speed film formation is performed at a rolling temperature of 40°C-110°C;

    optionally, equipment for the differential-speed film formation comprises a differential-speed film formation roller system;
    optionally, the differential-speed film formation roller system comprises a I-pressing roller, a II-pressing roller, a III-pressing roller, and a IV-pressing roller arranged in sequence; a first feeding inlet is formed above the position between the I-pressing roller and the II-pressing roller, a second feeding inlet is formed above the position between the III-pressing roller and the IV-pressing roller, and the II-pressing roller and the III-pressing roller can press the powder placed in the first feeding inlet and the second feeding inlet into a continuous film;
    optionally, a gap between adjacent rollers in the differential-speed film formation roller system is 0.10-0.60 mm.

13. The method according to claim 12, wherein a rolling direction of the I-pressing roller and the III-pressing roller is opposite to a rolling direction of the II-pressing roller and the IV-pressing roller;

    optionally, a linear velocity of the I-pressing roller and the IV-pressing roller is smaller than a linear velocity of the II-pressing roller and the III-pressing roller;
    optionally, a linear velocity of the I-pressing roller is the same as a linear velocity of the IV-pressing roller;
    optionally, a linear velocity of the II-pressing roller is the same as a linear velocity of the III-pressing roller;
    optionally, a ratio of the linear velocity of the I-pressing roller and/or the IV-pressing roller to the linear velocity of the II-pressing roller and/or the III-pressing roller is 1:(1.1-2).

14. A thick-electrode cathode sheet, wherein the thick-electrode cathode sheet is prepared by the preparation method for a thick-electrode cathode sheet according to any one of claims 1-13.

15. A primary battery, comprising a cathode sheet, an anode sheet, an electrolyte, and a separator, and the cathode sheet comprises the thick-electrode cathode sheet according to claim 14.

FIG. 1

FIG. 2

FIG. 3

FIG. 4

## INTERNATIONAL SEARCH REPORT

| International application No. |
|---|
| **PCT/CN2025/097517** |

### A. CLASSIFICATION OF SUBJECT MATTER

H01M4/06(2006.01)i; H01M4/08(2006.01)i; H01M4/04(2006.01)i; H01M6/14(2006.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 厚, 电极, 正极, 阴极, 纤维化, 造粒, 辊压, 液体, 溶剂, 醇, 油, 水, 烃, 乙炔黑, 二氧化锰, 电池, MnO2, thick, electrode, cathode, fiberiz+, fibrosis, pelletiz+, granulat+, roll+, liquid, solvent, alcohol, oil, water, hydrocarbon, acetylene black, batter+, cell?

### C. DOCUMENTS CONSIDERED TO BE RELEVANT

| Category* | Citation of document, with indication, where appropriate, of the relevant passages | Relevant to claim No. |
|---|---|---|
| PX | CN 119764316 A (HUIZHOU EVE ENERGY CO., LTD.) 04 April 2025 (2025-04-04) claims 1-10, description, paragraphs [0009]-[0127], and figures 1-4 | 1-15 |
| Y | CN 111342053 A (TAICANG ZHONGKE SINO NEW ENERGY TECHNOLOGY CO., LTD.) 26 June 2020 (2020-06-26) description, paragraphs [0004]-[0063] | 1-15 |
| Y | CN 117199243 A (NINGBO FUBANG BATTERY CO., LTD.) 08 December 2023 (2023-12-08) description, paragraphs [0008]-[0089] | 1-15 |
| A | CN 115881893 A (SICHUAN NEW ENERGY VEHICLE INNOVATION CENTER CO., LTD.) 31 March 2023 (2023-03-31) entire document | 1-15 |
| A | CN 118539006 A (DEEPAL AUTOMOBILE TECHNOLOGY CO., LTD.) 23 August 2024 (2024-08-23) entire document | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 July 2025** | **01 August 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2025/097517** |

### C. DOCUMENTS CONSIDERED TO BE RELEVANT

| Category* | Citation of document, with indication, where appropriate, of the relevant passages | Relevant to claim No. |
|---|---|---|
| A | CN 117728046 A (CHILWEE GROUP CO., LTD.) 19 March 2024 (2024-03-19) entire document | 1-15 |
| A | CN 115588784 A (JIANGSU UNIVERSITY et al.) 10 January 2023 (2023-01-10) entire document | 1-15 |
| A | JP 2000040504 A (SONY CORP.) 08 February 2000 (2000-02-08) entire document | 1-15 |

Form PCT/ISA/210 (second sheet) (July 2022)

**INTERNATIONAL SEARCH REPORT**
Information on patent family members

International application No.

**PCT/CN2025/097517**

| Patent document cited in search report | | | Publication date (day/month/year) | Patent family member(s) | | | Publication date (day/month/year) |
|---|---|---|---|---|---|---|---|
| CN | 119764316 | A | 04 April 2025 | None | | | |
| CN | 111342053 | A | 26 June 2020 | None | | | |
| CN | 117199243 | A | 08 December 2023 | None | | | |
| CN | 115881893 | A | 31 March 2023 | CN | 115881893 | B | 23 May 2023 |
| CN | 118539006 | A | 23 August 2024 | None | | | |
| CN | 117728046 | A | 19 March 2024 | None | | | |
| CN | 115588784 | A | 10 January 2023 | CN | 115588784 | B | 07 June 2024 |
| JP | 2000040504 | A | 08 February 2000 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2024119997665